# EUROPÄISCHE PATENTANMELDUNG

(11) **EP 1 785 929 A1**
(43) Veröffentlichungstag der Anmeldung: **16.05.2007**
(21) Anmeldenummer: 05024761.8
(22) Anmeldetag: 12.11.2005
(51) Int. Cl.: G06Q 30/00

(54) **Verfahren und Client-Server System zur Auswahl eines von einem Online-Shop zum Kauf angebotenen Produkts**

(71) Anmelder: HURRA Communications GmbH, 70599 Stuttgart (DE)
(72) Erfinder: Schweiner, René, 70599 Stuttgart (DE)
(74) Vertreter: Dreiss, Fuhlendorf, Steimle & Becker

(57) **Zusammenfassung**

Um die Auswahl und den Kauf eines von einem Online-Shop (3) angebotenen Produkts mit möglichst geringer Belastung eines mit dem Online-Shop (3) verbundenen Kommunikationsnetzwerks (4) zu erreichen wird vorgeschlagen, dass
- ein Benutzer (6) den Kauf eines ersten Produkts einleitet,
- eine dem Benutzer (6) zugeordnete Kennung erfasst wird,
- anhand der Kennung ein dem Benutzer (6) zugeordnetes Benutzerprofil ermittelt wird, wobei das Benutzerprofil mindestens eine von einem Server erfasste Profilinformation enthält,
- das Benutzerprofil ausgewertet wird,
- in Abhängigkeit von der Auswertung des Benutzerprofils und von mindestens einer Information bezüglich des ersten Produkts mindestens eine Produktklasse ermittelt wird,
- automatisch ein von dem Online-Shop (3) angebotenes weiteres Produkt ausgewählt wird, wobei das weitere Produkt der mindestens einen Produktklasse zugeordnet ist und
- eine Bestellung des ausgewählten weiteren Produkts automatisch vorbereitet wird.

## Beschreibung

Die Erfindung betrifft ein Verfahren zur Auswahl eines von einem Online-Shop zum Kauf angebotenen weiteren Produkts.

Die Erfindung betrifft auch ein Client-Server System, das einen mit einem Kommunikationsnetzwerk verbundenen Client und einen mit dem Kommunikationsnetzwerk verbundenen Server umfasst, wobei der Server als ein Online-Shop ausgebildet ist.

Die Erfindung betrifft ferner ein Computerprogramm, das auf einem Client-Server Systems ablauffähig ist.

Ein Online-Shop wird von einem Anbieter von Produkten, insbesondere Waren oder Dienstleistungen, betrieben. Dabei umfasst der Online-Shop und typischerweise einen Server in einem Kommunikationsnetzwerk, beispielsweise dem Internet. Dem Online-Shop sind Netzwerkseiten zugeordnet, die von einem ebenfalls mit dem Kommunikationsnetzwerk verbundenen Client angefordert werden können. Diese Netzwerkseiten werden auch als Web-Pages bezeichnet.

Unter einem Online-Shop soll insbesondere auch ein Anbieter von Informationen verstanden werden. In diesem Fall sind die Informationen die Produkte des Online-Shops. Die Bestellung eines Produkts kann also auch die Anforderung von Informationen sein. Derartige Informationen sind beispielsweise Nachrichten, Börsenberichte, Bild-, Musik und Videodateien.

Ein Benutzer des Online-Shops, also ein potentieller Kunde, kauft typischerweise ein von dem Online-Shop angebotenes Produkt dadurch, dass er mittels eines dem Benutzer zugeordneten Clients eine das Produkt beschreibende Netzwerkseite von dem Online-Shop anfordert, das Produkt auswählt und einen Bestellvorgang bezüglich des ausgewählten Produkts einleitet, um das Produkt zu kaufen. Häufig ist dem Online-Shop auch eine Produktsuchmaschine zugeordnet. Durch Eingabe eines Suchbegriffs kann der Benutzer eine Liste von Produkten anfordern, die dem eingegebenen Suchbegriff entsprechen.

Eine Produktsuchmaschine erlaubt typischerweise die Eingabe von unterschiedlichen Kriterien, wie eine Preisspanne, Hersteller, Produktart, Farbe, Größe, Gewicht, etc.. In Abhängigkeit einer Auswertung dieser Kriterien erzeugt die Produktsuchmaschine eine Ergebnisliste und veranlasst die Übermittlung der Ergebnisliste an den dem Benutzer zugeordneten Client. Der Benutzer kann dann weitere Informationen zu einem von ihm ausgewähltem Produkt anfordern. Dies ist beispielsweise durch die Aktivierung eines auf der die Ergebnisliste beinhaltenden Netzwerkseite dargestellten Links möglich. Ein Link beinhaltet den Verweis zu einer weiteren Netzwerkseite, die die angeforderten Informationen enthält.

Im Bereich des World Wide Web (WWW) ist ein Verweis mittels einer sogenannten URL (Uniform Resource Locator) realisiert. Eine URL ist eine eindeutige Kennung, die der angeforderten Netzwerkseite zugeordnet ist. Zur Darstellung einer mittels einer URL anforderbaren Netzwerkseite wird heutzutage ein sogenannter Browser verwendet, der auf den dem Benutzer zugeordneten Client abläuft.

Zur Beschreibung des Inhalts einer Netzwerkseite wird eine Seitenbeschreibungssprache verwendet. Heutzutage wird hierzu überwiegend die standardisierte Seitenbeschreibungssprache HTML (Hyper Text Markup-Language) eingesetzt. HTML erlaubt es, auf einfache Weise den Inhalt und das Aussehen einer Netzwerkseite in einem sogenannten HTML-Dokument zu beschreiben. Eine als HTML-Dokument realisierte Netzwerkseite kann von einem Server über das Kommunikationsnetzwerk an einen Client übermittelt werden und wird beispielsweise von dem auf dem Client ablaufenden Browser interpretiert und einem Benutzer dargestellt.

Das WWW ist ein weltweites Kommunikationsnetzwerk auf Basis des sogenannten Internets, an das viele Millionen Server und Clients angeschlossen sind. Die Anzahl der Server und Clients und insbesondere auch die Menge der zwischen den Servern und Clients übertragenen Daten ist seit der Entstehung von derartigen Kommunikationsnetzwerken stark gestiegen und wird weiter stark steigen, da zunehmend mehr Informationen über Kommunikationsnetzwerke übermittelt werden.

Um dem stetig ansteigenden Informationsbedarf von Benutzern beziehungsweise von diesen Benutzern zugeordneten Clients gerecht zu werden, werden unterschiedliche Techniken eingesetzt. Zum einen werden Kommunikationsnetze mit erhöhten Bandbreiten geschaffen und eingesetzt, beziehungsweise bestehende Kommunikationsnetzwerke erweitert. Ein Beispiel hierzu aus dem Bereich der mobilen Telekommunikation ist die Entwicklung des sogenannten UMTS (Universal Mobile Telecommunications System) das Gegenwärtig das weniger leistungsfähige GSM (Global System for Mobile Telecommunications) ersetzt.

Zum anderen werden Kompressionsalgorithmen entwickelt und eingesetzt, die die über die Kommunikationsnetzwerke zu übertragenden Datenmengen reduzieren.

Eine weitere Möglichkeit zu Beherrschung des gestiegen Informationsbedarfs sind Techniken, die das Anfordern von Informationen durch eine Optimierung des Vorgangs des Anforderns beschleunigen. Mittels derartiger Optimierungstechniken wird insbesondere versucht, herkömmliche Verfahren zur Anforderung von Informationen dadurch zu beschleunigen, dass die Anforderung selbst und/oder die Übermittlung der Informationen durch Übermittlung einer möglichst geringen Anzahl von Daten beziehungsweise Datenpaketen ermöglicht wird. Dies kann zu einer Verringerung des sogenannten Netzverkehrs, also der pro Zeiteinheit über ein Kommunikationsnetzwerk zu übermittelten Daten führen.

Mit deutlich steigender Tendenz werden heutzutage Produkte, also Waren, Dienstleistungen und Informationen von Online-Shops angeboten und von Benutzern besiehungsweise Kunden bei Online-Shops gekauft. Die für einen Kauf eines Produkts bei einem Online-Shop zwischen einem Benutzer, beziehungsweise einem dem Benutzer zugeordneten Client, und dem Online-Shop, beziehungsweise einem oder mehreren dem Online-Shop zugeordneten Servern, zu übermittelnden Daten erzeugen einen signifikanten Anteil des Netzverkehrs innerhalb eines Kommunikationsnetzwerks. Hierzu müssen insbesondere auch die Suche und Anforderung von Informationen gerechnet werden, die schließlich zu der Bestellung beziehungsweise dem Kauf eines Produkts führen.

Es ist daher Aufgabe der Erfindung, ein System für den Kauf eines von einem Online-Shop angebotenen weiteren Produkts bereitzustellen, mittels dessen eine Reduzierung des Netzverkehrs, also des innerhalb eines Kommunikationsnetzwerks zu übertragenden Datenvolumens, möglich ist.

Die Aufgabe wir durch ein Verfahren der Eingangs genannten Art dadurch gelöst, dass
- ein Benutzer den Kauf eines ersten Produkts einleitet,
- eine dem Benutzer zugeordnete Benutzerkennung erfasst wird,
- anhand der Kennung ein dem Benutzer zugeordnetes Benutzerprofil ermittelt wird, wobei das Benutzerprofil mindestens eine von einem Server erfasste Profilinformation enthält,
- das Benutzerprofil ausgewertet wird,
- in Abhängigkeit von der Auswertung des Benutzerprofils und von mindestens einer Information bezüglich des ersten Produkts mindestens eine Produktklasse ermittelt wird,
- automatisch ein von dem Online-Shop angebotenes weiteres Produkt ausgewählt wird, wobei das weitere Produkt der mindestens einen Produktklasse zugeordnet ist und
- eine Bestellung des ausgewählten weiteren Produkts automatisch vorbereitet wird.

Bei dem erfindungsgemäßen Verfahren leitet der Benutzer zunächst den Kauf eine ersten Produkts ein. Dies kann vorteilhafterweise in einem Ladengeschäft erfolgen. Hierbei kann der Benutzer beispielsweise den Kauf des ersten Produkts dadurch einleiten, dass er das erste Produkt an einer Kasse vorlegt. Die Benutzerkennung kann hierbei beispielsweise mittels einer Kundenkarte, einer EC-Karte oder einer Kreditkarte erfasst werden.

Vorteilhafterweise wird zur Ermittlung der Information bezüglich des ersten Produkts eine dem Produkt zugeordnete, in einem RFID (Radio Frequency Identification) abgespeicherte Kennung mittels eines RFID-readers erfasst. Diese Ausführungsform kann realisiert werden, indem ein sogenannter RFID-transponder jedem Produkt, das in dem Ladengeschäft zum Kauf angeboten wird, oder zumindest jeder Gruppe von gleichartigen Produkten zugeordnet wird. Der Benutzer ist dann mit einem RFID-reader, also einer Vorrichtung zum Auslesen der in dem RFID-transponder abgespeicherten Daten, ausgestattet. In dem RFID-transponder ist beispielsweise ein Kennung des Produkts abgespeichert. Dies kann beispielsweise in Form der sogenannten EAN (European Article Number) des Produkts sein, die eine eindeutige Identifizierung des Produkts ermöglicht.

Ein RFID-reader kann beispielsweise dem Benutzer beim Betreten des Ladengeschäfts ausgehändigt werden. Besonders vorteilhaft ist es jedoch, wenn der RFID-reader dem Einkaufwagen bzw. dem Einkaufskorb zugeordnet ist, den der Benutzer für den Einkauf in dem Ladengeschäft verwendet. Legt der Benutzer ein Produkt in den Einkaufswagen, so kann mittels des RFID-readers automatisch das Produkt erkannt werden und mittels des erfindungsgemäßen Verfahrens ein weiteres Produkt ausgewählt werden.

Besonders vorteilhaft kann es hierbei sein, wenn dem Einkaufwagen bzw. dem Einkaufskorb ein Display bzw. ein Bildschirm zugeordnet ist, auf dem dem Benutzer Informationen bezüglich des ausgewählten Produkts angezeigt werden können. Ferner kann dem Einkaufswagen ein Auswahlmittel zugeordnet sein, mittels dessen der Benutzer den Kauf des ausgewählten Produkts bestätigen bzw. veranlassen kann. Dies kann beispielsweise mittels eines berührungsempfindlichen Displays oder dafür vorgesehener Funktionstasten erreicht werden.

Die Benutzerkennung kann hierbei beispielsweise dadurch erfasst werden, dass dem Einkaufwagen bzw. dem Einkaufkorb ein Kartenlesegerät zugeordnet ist, mittels dessen eine auf einer dem Benutzer zugeordneten Kundenkarte abgespeicherte Benutzerkennung erfasst wird.

Vorzugsweise wird der Kauf des ersten Produkts bei einem ersten Online-Shop eingeleitet. Dies kann beispielsweise dadurch erfolgen, dass der Benutzer bei dem ersten Online-Shop das erste Produkt dadurch auswählt, dass er es in einen sogenannten Warenkorb legt.

Bei dem erfindungsgemäßen Verfahren wird eine dem Benutzer zugeordnete Kennung erfasst. Mittels der dem Benutzer zugeordneten Kennung wird ein dem Benutzer zugeordnetes Benutzerprofil ermittelt. Dieses Benutzerprofil wurde bereits erstellt und umfasst mindestens eine von einem ersten Server erfasste Profilinformation. Hierbei kann der erste Server beispielsweise der erste Online-Shop sein, bei dem der Benutzer bereits zu einem früheren Zeitpunkt eingekauft hat.

Das Benutzerprofil wird dahingehend ausgewertet, dass eine Vorhersage darüber getroffen werden kann, für welches weitere Produkt der Benutzer sich interessieren könnte. Dies wird dadurch erreicht, dass aus der Auswertung des Benutzerprofils und beispielsweise einer Information bezüglich des ersten Produkts eine Produktklasse ermittelt wird. Eine derartige Produktklasse kann beispielsweise nur ein einzlenes Produkt umfassen. Einer Produktklasse können aber insbesondere mehrere Produkte zugeordnet sein. Dies sind Produkte, die für den Benutzer mit hoher Wahrscheinlichkeit von Interesse sind und mit gewisser Wahrscheinlichkeit von diesem in absehbarer Zeit gekauft werden.

Automatisch wird ein von dem Online-Shop angebotenes weiteres Produkt ausgewählt, das der ermittelten Produktklasse zugeordnet ist. Umfasst die Produktklasse nur ein Produkt, so wird dieses Produkt ausgewählt. Befinden sich mehrere Produkte in der Produktklasse, so können ein oder mehrere Produkte dadurch ausgewählt werden, dass beispielsweise die preisgünstigsten Produkte ausgewählt werden, Sonderangebote ausgewählt werden oder Produkte, die besonders häufig gekauft werden, ausgewählt werden.

Eine Bestellung des ausgewählten weiteren Produkts wird automatisch vorbereitet. Dies kann beispielsweise dadurch erfolgen, dass das ausgewählte Produkt in den Warenkorb gelegt wird, in dem sich bereits das erste Produkt befindet. Wurde das erste Produkt bei einem ersten Online-Shop gekauft, beziehungsweise wurde der Kauf des ersten Produkts bei einem Online-Shop eingeleitet, so kann auf der Bestellbestätigungsseite, die von dem ersten Online-Shop automatisch üblicherweise bei einer Bestellung beziehungsweise bei einem Kauf eines ersten Produkts von dem ersten Online-Shop an den dem Benutzer zugeordneten Client übermittelt wird, automatisch eine Information der Gestalt übermittelt werden, dass dem Benutzer das ausgewählte weitere Produkt angezeigt wird und der Benutzer durch einfaches Bestätigen, beispielsweise durch Aktivieren einer dafür vorgesehenen Schaltfläche, die Bestellung des ersten Produkts sowie des weiteren Produkts durchführen und insbesondere den Kauf folglich beider Produkte gleichzeitig tätigen kann. Selbstverständlich kann auf einer derartigen Bestellbestätigungsseite ebenso durch einfaches Aktivieren einer dafür vorgesehenen Schaltfläche das ausgewählte weitere Produkt beispielsweise aus dem Warenkorb wieder entfernt werden und ein Kauf des erste Produkts allein ausgeführt werden.

Das erfindungsgemäße Verfahren schafft dadurch eine Möglichkeit, den Kauf mehrerer Produkte zusammenzufassen. Dies geschieht dadurch, dass automatisiert dem Benutzer beim Kauf des ersten Produkts ein weiteres Produkt zum Kauf angeboten wird. Insbesondere wird hierbei die Bestellung des weiteren Produkts bereits automatisch vorbereitet. Eine Übertragung von Daten zwischen dem Client und dem Online-Shop, von dem das weitere Produkt zum Kauf angeboten wird, wird somit deutlich reduziert. Insbesondere dadurch, dass dem Benutzer mehrere weitere Produkte zum Kauf angeboten werden können und diese zusammen mit den bereits ausgewählten ersten Produkten gekauft werden können, kann eine deutliche Reduzierung der über das Kommunikationsnetzwerk zu übertragenden Datenmengen erreicht werden.

Gemäß einer bevorzugten Ausführungsform des erfindungsgemäßen Verfahrens, bei der der Kauf des ersten Produkts mehrere Aktionen umfasst, wird bei dem Kauf des weiteren Produkts mindestens eine Aktion zusammen mit der entsprechenden, für den Kauf des ersten Produkts durchzuführenden Aktion, durchgeführt. Eine derartige Aktion ist beispielsweise die Bestellung, Bestätigung, Zahlung oder Versendung der Ware. Insbesondere wenn der erste Online-Shop mit dem Online-Shop, von dem das weitere Produkt zum Kauf angeboten wird, übereinstimmt, kann beispielsweise eine gemeinsame Versendung der Produkte erfolgen.

Es ist jedoch auch vorstellbar, dass, wenn diese beiden Online-Shops nicht übereinstimmen, der Online-Shop, der das weitere Produkt zum Kauf anbietet, dieses in einem ersten Schritt an den ersten Online-Shop versendet und der erste Online-Shop das so erhaltene Produkt dann zusammen mit dem ersten Produkt an den Benutzer sendet. Insbesondere wenn mehrere Benutzer zusätzlich zu dem Kauf eines ersten Produkts bei dem erste Online-Shop auch ein oder mehrere von dem zweiten Online-Shop angebotene Produkte kaufen, kann es vorteilhaft sein, das der zweite Online-Shop die Produkte zunächst an den ersten Online-Shop sendet und dieser diese Produkte zusammen mit dem bei dem ersten Online-Shop von dem Benutzer gekauften Produkten gemeinsam an den jeweiligen Benutzer sendet.

Eine gemeinsame Bestellung des ersten Produkts und des weiteren Produkts kann beispielsweise dadurch erfolgen, dass das weitere Produkt in den selben Warenkorb gelegt wird, in dem das erste Produkt sich bereits befindet.

Eine Bestätigung des Kaufs kann beispielsweise dadurch gemeinsam erfolgen, dass durch Aktivierung einer einzigen Schaltfläche auf einer Netzwerkseite, auf der beispielsweise der Warenkorb des ersten Produkts dargestellt wird, sowohl das erste Produkt als auch das weitere Produkt gekauft werden können.

Eine gemeinsame Bezahlung für den Kauf des ersten Produkts und den Kauf des weiteren Produkts kann beispielsweise dadurch erfolgen, dass der Benutzer nur einmalig Daten bezüglich der Bezahlung an den ersten Online-Shop übermittelt. Eine zweite Übermittlung derartiger Daten von dem Benutzer beziehungsweise von dem dem Benutzer zugeordneten Client an den zweiten Online-Shop ist hierbei nicht notwendig. Dies kann dadurch erreicht werden, dass diese Daten von diesem ersten Online-Shop an den zweiten Online-Shop weiter übermittelt werden. Insbesondere kann dies aber auch dadurch erreicht werden, dass die Zahlung zunächst zwischen dem Benutzer und dem ersten Online-Shop durchgeführt wird. Innerhalb einer vorgegebenen Zeitspanne, beispielsweise einmal pro Monat, können dann der erste Online-Shop und der zweite Online-Shop sämtliche bestehenden Zahlungsdifferenzen in einer einzigen Zahlung ausgleichen. Dadurch wird erneut der Netzverkehr deutlich verringert.

Vorteilhafterweise wird das Verhalten des Benutzers bezüglich des ausgewählten weiteren Produkts erfasst und das Benutzerprofil in Abhängigkeit von dem erfassten Verhalten automatisch aktualisiert. Dadurch wird eine ständige Adaption des Benutzerprofils und somit eine hohe Aktualität des Benutzerprofils erreicht. Das Verhalten des Benutzers bezüglich des ausgewählten weiteren Produkts kann insbesondere die Bestätigung und damit die Durchführung des Kaufs oder aber die Nicht-Durchführung des Kaufs sein.

Kauft der Benutzer das ausgewählte weitere Produkt, so kann das Benutzerprofil beispielsweise dahingehend verändert werden, dass mittels einer diesem Produkt zugeordneten Kennung in dem Benutzerprofil angezeigt wird, dass dieses Produkt in Zukunft nicht mehr ausgewählt werden soll. Hat der Benutzer eines von mehreren ausgewählten weiteren Produkten gekauft, so können Merkmale, die dieses gekaufte weitere Produkt von anderen, nicht gekauften weitere Produkten aus derselben Produktklasse unterscheidet zur Aktualisierung des Benutzerprofils herangezogen werden. Beispielsweise kann sich hieraus ergeben, dass der Benutzer überwiegend das günstigste ausgewählte weitere Produkt kauft. Dies könnte dazu führen, dass dem Benutzer in Zukunft nur noch besonders günstige Produkte innerhalb einer Produktklasse ausgewählt und zum Kauf angeboten werden. Durch eine derartige Aktualisierung des Benutzerprofils wird folglich erreicht, dass die Auswahl des weiteren Produkts mit besonders hoher Wahrscheinlichkeit von dem Benutzer gekauft wird. Ein separater Kauf dieses Produkts zu einem späteren Zeitpunkt erfolgt somit nicht. Damit kann insbesondere auch das Datenvolumen, das für einen weiteren separaten Kauf übertragen werden müsste, reduziert werden.

Gemäß einer weiteren vorteilhaften Ausführungsform des erfindungsgemäßen Verfahrens erfolgt eine Information des Benutzers bezüglich der Einleitung des Bestellvorgangs zum Kauf des automatisch ausgewählten weiteren Produkts per E-Mail, SMS oder MMS. Eine Bestätigung der Bestellung erfolgt ebenfalls per E-Mail, SMS oder MMS. Auch hierbei kann vorgesehen sein, dass der Benutzer durch einfaches Aktivieren einer Schaltfläche bei der E-Mail oder einfaches Rücksenden einer bereits formularartig vorbereiteten SMS oder MMS den Kauf des weiteren Produkts durchführt. Insbesondere kann auch hierbei vorgesehen sein, dass bei dem Kauf des weiteren Produkts mindestens eine Aktion zusammen mit dem Kauf des erste Produkts durchgeführt wird. Dies kann beispielsweise die Bezahlung, die Versendung oder die eben beschriebene Bestellbestätigung sein. Eine derartige Ausführungsform kann beispielsweise vorteilhaft sein, wenn der Kauf des ersten Produkts in einem Ladengeschäft eingeleitet wird.

Vorzugsweise wird eine Information des Benutzers bezüglich der Einleitung des Bestellvorgangs zum Kauf des weitere Produkts mittels einer Netzwerkseite durchgeführt, die dem Benutzer mittels eines dem Benutzer zugeordneten Clients übermittelt wird. Eine Bestätigung der Bestellung erfolgt dann durch Aktivieren einer auf der Netzwerkseite dargestellten Schaltfläche. Dies ist insbesondere vorteilhaft, wenn der Client beispielsweise als Personal Computer (PC), hand-held oder als mobiles Telekommunikationsgerät ausgebildet ist.

Es kann ferner vorgesehen sein, dass in dem Ladengeschäft, in dem der Benutzer das erste Produkt kauft, ein Bildschirm angebracht ist auf dem dem Benutzer das mindestens eine weitere ausgewählte Produkt dargestellt wird. Durch Aktivierung einer ebenfalls auf dem Bildschirm dargestellten Schaltfläche kann der Benutzer den Kauf des dort dargestellten weiteren Produkts durchführen. Diese Ausführung kann insbesondere zu einer Reduzierung der über das Kommunikationsnetzwerk zu übertragenden Datenmenge verwendet werden.

Vorteilhafterweise enthält das Benutzerprofil mindestens eine Profilinformation bezüglich
- eines bestellten oder gekauften Produkts,
- eines nicht gekauften Produkts,
- des Kaufverhaltens des Benutzers bei diesem oder einem anderen Online-Shop,
- mindestens eines dem Benutzer zugeordneten personenbezogenen Datums,
- mindestens eines Suchbegriffs, der von dem Benutzer an eine Suchmaschine oder eine Produktsuchmaschine übermittelt wurde, oder
- des Verhaltens des Benutzers bezüglich mindestens einer diesem dargestellten Werbeanzeige.

Derartige Profilinformationen können besonders gut zur Bildung einer Produktklasse herangezogen werden, die weitere Produkte enthält, die von besonderes hohem Interesse für den Benutzer sind, von diesem also mit hoher Wahrscheinlichkeit gekauft werden.

Eine Profilinformation, die ein bereits bestelltes oder gekauftes Produkt beschreibt, kann beispielsweise dazu herangezogen werden, derartige Produkte dem Benutzer nicht nochmals zum Kauf anzubieten. Ebenso kann eine Profilinformation bezüglich eines nicht gekauften Produktes herangezogen werden.

Profilinformationen bezüglich des Kaufverhaltens des Benutzers bei einem Ladengeschäft oder einem Online-Shop, insbesondere auch bei anderen Online-Shops, kann beispielsweise darüber Aufschluss geben, ob der Benutzer besonders hochpreisige Produkte bevorzugt oder zunächst technische Details oder Testergebnisse einsehen möchte.

Eine Profilinformation, die mindestens einen Suchbegriff beschreibt, kann besonders deutlich ein Interesse des Benutzers darstellen. Dies kann zur Bildung von Produktklassen besonders gut herangezogen werden.

Eine Profilinformation, die das Verhalten des Benutzers bezüglich einer diesem dargestellten Werbeanzeige beschreibt, also beispielsweise ob ein einer Werbeanzeige zugeordneter Link aktiviert wurde, kann auch besonders gut Aufschluss über etwaige Interessen des Benutzers geben.

Eine Profilinformation bezüglich eines dem Benutzer zugeordneten Datums, beispielsweise des Alters, Geschlechts, Wohnorts, Berufs, Hobbies oder weiterer Interessen, kann besonders gut zur Auswahl eines weiteren Produkts herangezogen werden und die Wahrscheinlichkeit, dass ein derartiges Produkt von dem Benutzer gekauft wird, also eine Kaufabsicht bereits vorhergesehen wird, deutlich erhöhen.

Vorzugsweise wird das weitere Produkt in Abhängigkeit von einem dem ersten Online-Shop zugeordneten charakteristischen Merkmal ausgewählt. Ist der erste Online-Shop beispielsweise ein Juwelier, der nur besonders hochpreisige Produkte zum Kauf anbietet, so kann von einer hohen Kaufkraft des Benutzers ausgegangen werden. Eine derartige Information kann dazu verwendet werden, dem Benutzer auch nur eher hochpreisige weitere Produkte zum Kauf anzubieten. Aus einer Produktklasse würden in einem solchen Fall folglich eher hochpreisige Produkte ausgewählt werden.

Informationen bezüglich eines Ladengeschäfts können ebenso herangezogen werden. Kauft der Benutzer beispielsweise in einer Tankstelle ein, so kann beispielsweise darauf geschlossen werden, dass der Benutzer mit hoher Wahrscheinlichkeit ein Automobil besitzt und an Produkten bezüglich des Automobils Interesse hat.

Zur Identifizierung des dem Benutzer zugeordneten Benutzerprofils kann beispielsweise eine Kreditkartennummer die der Benutzer beim Kauf eines Produkts angibt oder eine mittels einer EC-Karte übermittelte Kontonummer und Bankleitzahl herangezogen werden. Insbesondere können auch Name und Geburtsdatum als Kennung herangezogen werden. Vorteilhafterweise jedoch ist die dem Benutzer zugeordnete Kennung ein Cookie, eine Einwahl-ID oder eine Browser-ID.

Ein Cookie ist eine Menge von Informationen, die in einem dem Client zugeordneten Speicherbereich abgespeicher wird. Man spricht hier auch von dem "Setzen eines Cookies". Es kann beispielsweise vorgesehen sein, dass automatisch ein Cookie gesetzt wird, wenn der Client einen auf einer Netzwerkseite dargestellten Link aktiviert. Kauft der Client beispielsweise bei dem ersten Online-Shop ein Produkt, so kann der Online-Shop das Setzen eines Cookies bei dem dem Benutzer zugeordneten Client veranlassen. Fordert der Client erneut eine Netzwerkseite von dem Online-Shop an, so kann vorgesehen sein, dass das Cookie automatisch von dem Client an den Online-Shop übermittelt wird. Ein Cookie ist üblicherweise derart realisiert, dass es nur an den Server beziehungsweise Online-Shop zurückgeschickt werden kann, der den Client zum setzen des Cookies veranlasst hat. In einem Cookie können insbesondere auch Profilinformationen abgespeichert werden.

Eine Einwahlnummer oder Einwahl-ID kann beispielsweise eine dem Benutzer zugeordnete Benutzerkennung sein, mit der sich der Benutzer mittels des ihm zugeordneten Clients über einen Zugangsprovider bei dem Kommunikationsnetzwerk anmeldet. Dies ermöglicht es beispielsweise, dem Benutzer ein Benutzerprofil zuzuordnen, ohne das die reale Identität, also beispielsweise Name und Adresse des Benutzers, bekannt sind, so dass die Anonymität des Benutzers gewahrt bleiben kann.

Es kann ferner vorgesehen sein, dass dem Browser eine Kennung zugeordnet ist. Diese Kennung kann automatisch bei jeder Anfrage von dem Browser an den Online-Shop übermittelt werden. Auch dies ermöglicht es, den Benutzer zu identifizieren und damit diesem sein Benutzerprofil zuzuordnen.

Auch mittels eier Gerätenummer, beispielsweise der Nummer einer Netzwerkkarte, die eine eindeutige Identifizierung der Netzwerkkarte ermöglicht, kann das dem Benutzer zugeordnete Benutzerprofil ausgewählt werden.

Gemäß einer weiteren bevorzugten Ausführungsform des erfindungsgemäßen Verfahrens wird das Verhalten des Benutzers bezüglich des ausgewählten weiteren Produkts erfasst und ausgewertet. In Abhängigkeit von einem Ergebnis dieser Auswertung wird die Klassifizierung aktualisiert. Dies erlaubt eine Adaption des erfindungsgemäßen Verfahrens dadurch, dass die Regeln mittels derer eine Klassifizierung der Produkte, beziehungsweise eine Einteilung der Produkte in Produktklassen, erfolgt an das Verhalten des Benutzers angepasst werden können. Insbesondere kann aus einer Relation zwischen dem ersten Produkt und diesem zugeordneten weiteren Produkten unter Verwendung von Informationen bezüglich des Verhaltens des Benutzers eine Verbesserung der Vorhersagefunktion erreicht werden.

Beschreibt die Relation zwischen einem erste Produkt und einem weiteren ausgewählten Produkt beispielsweise ein Zubehör, ist das weitere ausgewählte Produkt folglich ein Zubehör zu dem ersten Produkt, und kauft der Benutzer in derartigen Fällen besonders häufig das ausgewählte weitere Produkt, also das Zubehör, so kann vorgesehen werden, dass diesem Benutzer bei weiteren Einkäufen bevorzugt Zubehör als weiteres ausgewähltes Produkt angezeigt und zum Kauf angeboten wird. Ebenso kann selbstverständlich Wissen daraus abgeleitet werden, wenn der Benutzer bei Vorliegen einer Zubehör-Relation besonders häufig ein derartiges Zubehör nicht kauft.

Die Regeln zur Klassifizierung von Produkten, beziehungsweise zum Zuordnen von Produkten in Produktklassen, sind beispielsweise Teil eines sogenannten regelbasierten Expertensystems. Eine Anpassung beziehungsweise Verbesserung eines derartigen Expertensystems kann durch Änderung der Regeln erfolgen.

Vorzugsweise wird das Benutzerprofil mittels eines Profilservers verwaltet, wobei der Profilserver mit einem Kommunikationsnetzwerk verbunden ist. Dies ermöglich es besonders gut, Benutzerprofile unabhängig von den Servern, beispielsweise den Online-Shops mittels derer Profilinformationen erfasst werden, zu verwalten und zu aktualisieren. Insbesondere ermöglicht die Verwendung eines Profilservers, dass von mehreren unterschiedlichen Servern, also beispielsweise Online-Shops, auf Benutzerprofile zugegriffen werden kann. Hierzu wird beispielsweise von einem Online-Shop die Kennung des Benutzers an den Profilserver gesendet und von dem Profilserver das entsprechende Benutzerprofil zurückgesendet. Besonders vorteilhaft ist es jedoch, wenn der Profilserver auch die Auswahl des weiteren Produkts vornimmt. Hierzu kann der Profilserver beispielsweise dem zweiten Online-Shop zugeordnet sein. Insbesondere kann der Profilserver jedoch auch unabhängig von den Online-Shops sein. Die Online-Shops wiederum können Informationen bezüglich der von diesen angebotenen Produkte dem Profilserver zur Verfügung stellen. Der Profilserver kann dann unabhängig von dem Online-Shop, der ein Produkt anbietet, ein oder mehrere weitere Produkte auswählen.

Gemäß einer weiteren vorteilhaften Ausführungsform des erfindungsgemäßen Verfahrens, bei der der Kauf des ersten Produkts in dem ersten Online-Shop erfolgt, erfolgt die Auswahl des weiteren Produkts in Abhängigkeit von der Auswertung eines sogenannten Referers.

Wird mittels eines Clients ein auf einer Netzwerkseite dargestellter Link aktiviert, so wird an den Server, auf dem sich die Netzwerkseite befindet, die der URL des Links zugeordnet ist, eine Information darüber gesendet, auf welcher Netzwerkseite oder insbesondere von welchem Server aus der Link aktiviert wurde. Eine derartige Information wird als Referer bezeichnet.

Mittels eines Referers ist es also möglich, das sogenannte Surf-Verfahren eines Benutzers zu ermitteln. Unter dem Surf-Verhalten versteht man beispielsweise eine Kette von Servern, von denen der Benutzer Informationen angefordert hat. Mittels derartiger Informationen kann das Benutzerprofil angereichert werden und somit auf Interessen des Benutzers geschlossen werden. Dies wiederum kann verwendet werden, um weitere Produkte auszuwählen, die mit besonders hoher Wahrscheinlichkeit von dem Benutzer gekauft werden.

Die Aufgabe wird auch durch ein Client-Server System der eingangs genannten Art dadurch gelöst, dass das Client-Server System Mittel zur Durchführung eines Verfahrens nach einem der Ansprüche 1 bis 19 aufweist.

Von besonderer Bedeutung ist die Realisierung dieser Erfindung in Form eines Computerprogramms. Dabei ist das Computerprogramm auf mindestens einem Rechengerät bzw. Computer, insbesondere auf einem Client oder Server, ablauffähig und zur Ausführung des erfindungsgemäßen Verfahrens programmiert. Ein derartiger Server kann beispielsweise ein Online-Shop oder ein Profilserver sein. Insbesondere können zur Ausführung des erfindungsgemäßen Verfahrens Teile des Computerprogramms auf unterschiedlichen Computern, also Clients und Servern, ablaufen. Die Erfindung wird also durch das Computerprogramm realisiert, so dass dieses Computerprogramm in gleicher Weise die Erfindung darstellt wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Access-Memory, ein Read-Only-Memory, ein Flash-Memory, eine Festplatte, eine CD, eine DVD oder ein dem Computer zugeordneter Speicherbereich sein.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehungen sowie unabhängig von ihrer Formulierung bzw. Darstellung in der Beschreibung bzw. in der Zeichnung.

In der Zeichnung zeigen:
- Figur 1: ein erfindungsgemäßes Client-Server System gemäß einer ersten Ausführungsform;
- Figur 2: ein Ablaufdiagramm des erfindungsgemäßen Verfahrens gemäß einer ersten Ausführungsform;
- Figur 3: ein erfindungsgemäßes Client-Server System gemäß einer zweiten Ausführungsform und
- Figur 4: ein Ablaufdiagramm des erfindungsgemäßen Verfahrens gemäß einer zweiten Ausführungsform.

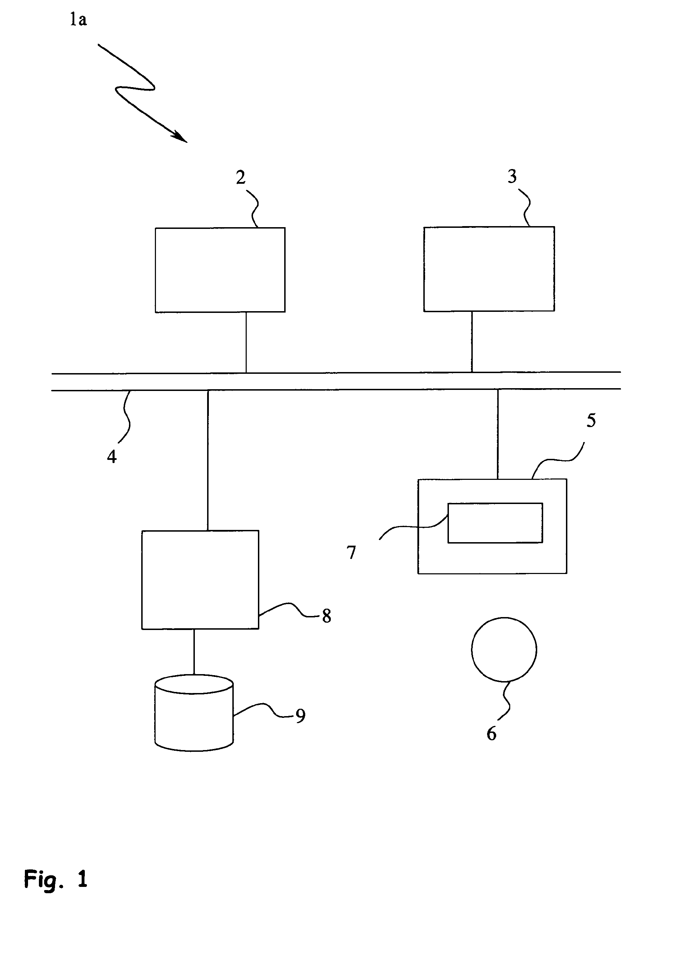

In Figur 1 ist ein Client-Server System 1a dargestellt. Das Client-Server System 1a umfasst einen zweiten Online-Shop 3, die mit einem Kommunikationsnetzwerk 4 beispielsweise dem Internet, verbunden sind. Das Client-Server System 1a umfasst ferner einen Client 5 der einem Benutzer 6 zugeordnet ist. Der Client 5 kann beispielsweise als Personal Computer (PC), Handheld, PDA oder mobiles Telekommunikationssystem ausgebildet sein. Auf dem Client 5 läuft ein Browser 7 ab.

Das Client-Server System 1a umfasst ferner einen ProfilServer 8, dem eine Datenbank 9 zugeordnet ist. Der Profilserver 8 verwaltet Benutzerprofile, die in der Datenbank 9 abgespeichert sind. Der Client 5 und der Profilserver 8 sind ebenfalls mit dem Kommunikationsnetzwerk 4 verbunden.

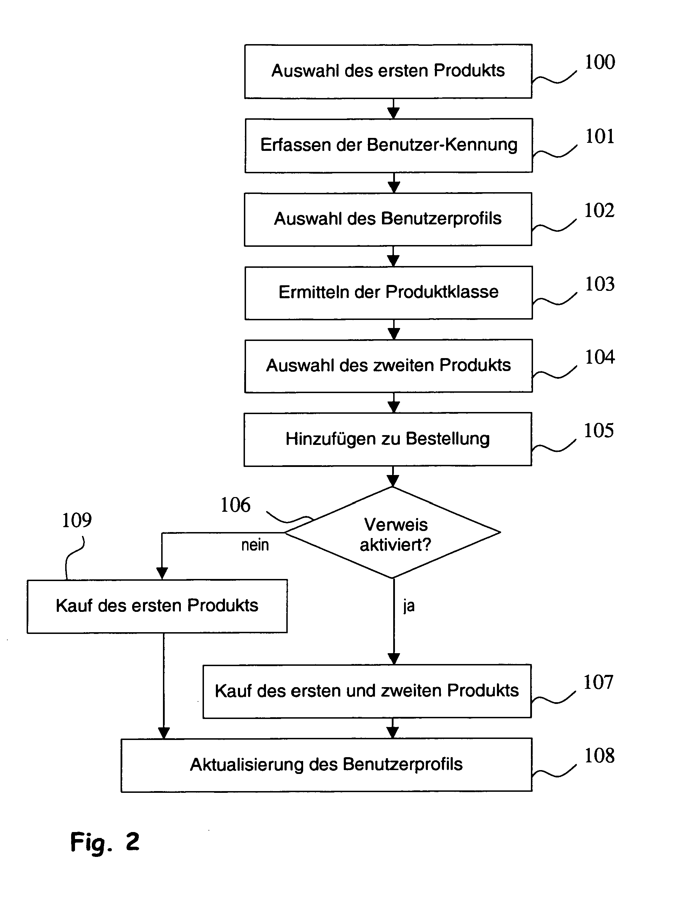

Das Client-Server System 1a umfasst Mittel zur Durchführung des erfindungsgemäßen Verfahrens. Diese Mittel sind beispielsweise zumindest teilweise in Form von in Figur 1 nicht dargestellten Computerprogrammen realisiert. Eine Ausführungsform des erfindungsgemäßen Verfahrens, das beispielsweise auf dem Client-Server System 1a ausgeführt werden könnte ist in Figur 2 dargestellt.

In einem Schritt 100 leitet der Benutzer 6 den Kauf eines ersten Produkts ein. Dies kann beispielsweise bei dem ersten Online-Shop 2 erfolgen. Hierzu kann dem ersten Online-Shop 2 eine Produktsuchmaschine zugeordnet sein, die dem Benutzer 6 die gezielte Suche nach einem oder mehreren Produkten erlaubt. Hat sich der Benutzer 6 zum Kauf eines ersten Produkts entschieden, kann vorgesehen sein, dass dieses in einen Warenkorb gelegt wird. Bei einem derartigen Warenkorb handelt es sich um einen virtuellen Warenkorb, der dem Benutzer 6 zugeordnet ist und beispielsweise in Form einer Liste mittels einer Netzwerkseite von dem ersten Online-Shop 2 an den Client 5 mittels des Kommunikationsnetzwerks 4 übermittelt und mittels des Browsers 7 dem Benutzer 6 angezeigt wird.

In einem Schritt 101 wird eine dem Benutzer 6 bzw. dem Client 5 zugeordnete Kennung erfasst. Dies kann beispielsweise dadurch erfolgen, dass der Benutzer diese Kennung an den ersten Online-Shop 2 übermittelt. Hierzu kann auf einer von dem ersten Online-Shop 2 an den Client 5 übermittelten Netzwerkseite ein Eingabefeld vorgesehen sein. Besonders vorteilhaft ist es jedoch, wenn diese Kennung automatisch erfasst wird. Dies ist beispielsweise dadurch möglich, dass der Browser 7 eine diesem zugeordnete sogenannte Browser-ID automatisch an den ersten Online-Shop 2 sendet, wenn mittels des Browsers 7 von dem ersten Online-Shop 2 eine Netzwerkseite 2 angefordert wird. Eine Kennung kann auch dadurch erfasst werden, dass eine sogenannte Gerätenummer, beispielsweise eine der Netzwerkkarte des Clients 5 zugeordnete Kennung, automatisch an den ersten Online-Shop 2 übermittelt wird.

In dem Schritt 101 wird von dem ersten Online-Shop 2 diese Kennung an den Profilserver 8 übermittelt, damit dieser das dem Benutzer 6 zugeordnete Benutzerprofil auswählen kann.

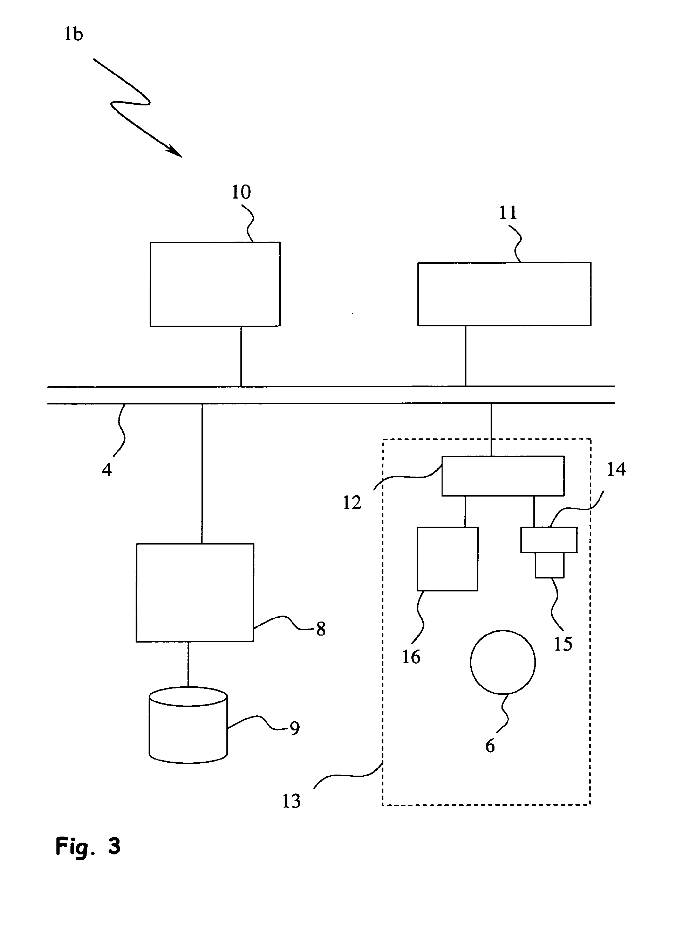

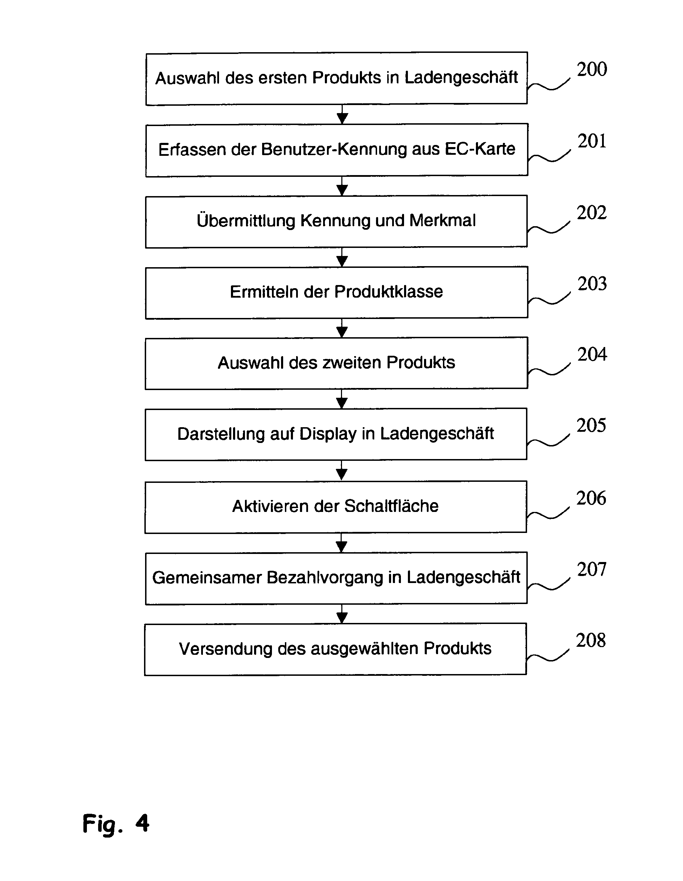

Insbesondere ist es möglich, das die dem Benutzer zugeordnete Kennung in dem Schritt 101 automatisch von dem Client 5 an den Profilserver 8 übermittelt wird. Hierzu kann beispielsweise auch ein sogenanntes Tracking-System eingesetzt werden. Der Einsatz eines Tracking-Systems, beispielsweise unter Verwendung eines dem Client 5 zugeordneten Cookies, ist in den Figuren 3 und 4 näher erläutert.

In einem Schritt 102 der in Figur 2 dargestellten Ausführungsform des erfindungsgemäßen Verfahrens wird das dem Benutzer 6 zugeordnete Benutzerprofil von dem Profilserver 8 ausgewählt. Hierzu richtet der Profilserver 8 beispielsweise eine Anfrage an die Datenbank 9 und erhält von der Datenbank 9 in Abhängigkeit von der dem Benutzer 6 zugeordneten Kennung das dem Benutzer 6 zugeordnete Benutzerprofil zurück.

In einem Schritt 103 wird die Profilinformation ausgewertet. Dies kann beispielsweise dadurch geschehen, dass das Benutzerprofil von dem Profilserver 8 von dem ersten Online-Shop 2 über das Kommunikationsnetzwerk 4 zunächst übermittelt wird und die Auswertung der Profilinformation durch den ersten Online-Shop 2 durchgeführt wird.

Es ist aber ebenso gut möglich, dass die Auswertung der Profilinformation von dem Profilserver 8 mittels eines geeigneten Softwareelements durchgeführt wird. Ein Ergebnis dieser Auswertung kann dann von dem Profilserver 8 an den ersten Online-Shop 2 übermittelt werden. Diese Ausführungsform hat den Vorteil, dass weniger Daten über das Kommunikationsnetzwerk 4 übertragen werden müssen, da lediglich das Ergebnis der Auswertung der Profilinformation und nicht das gesamte Benutzerprofil von dem Profilserver 8 an den ersten Online-Shop 2 übermittelt werden muss.

Zur Auswertung der Profilinformation kann beispielsweise ein Expertensystem eingesetzt werden. Ein Expertensystem ist eine Technik aus dem Bereich der künstlichen Intelligenz, mittels der automatisiert Entscheidungen getroffen werden können. Hierzu sind beispielsweise bestimmte Regeln vorgegeben (regelbasiertes Expertensystem). Mittels eines derartigen Expertensystems kann beispielsweise ein besonders aktuelles Interesse des Benutzers 6 ermittelt werden. Hierzu können Informationen verwendet werden, die beschreiben, nach welchen Produkten oder Informationen der Benutzer 6 in letzter Zeit, also innerhalb einer bestimmten Zeitspanne, bei einer oder mehreren Suchmaschinen oder bei einer oder mehreren Produktsuchmaschinen gesucht hat. Insbesondere können auch Informationen verwendet werden, wie der Benutzer 6 mit derartig erhaltenen Informationen weiter verfahren ist. War derartigen Informationen, also beispielsweise Suchergebnissen von einer Suchmaschine, ein Link zugeordnet, der zu weiteren Informationen, die auf weiteren Netzwerkseiten dargestellt sind, verwiesen hat und ist der Benutzer 6 diesem Link durch Aktivieren gefolgt, so kann daraus auf ein Interesse des Benutzers 6 für derartige Informationen geschlossen werden.

Selbstverständlich hängt das erfindungsgemäße Verfahren von der Güte der Informationen innerhalb des Benutzerprofils ab. Ein wesentlicher Punkt für eine hohe Güte eines Benutzerprofils ist die Aktualität. Es ist daher besonders vorteilhaft, wenn Profilinformationen von vielen unterschiedlichen Quellen, also insbesondere vielen unterschiedlichen Servern, erfasst und in dem Benutzerprofil gesammelt werden.

Ein Erfassen von Profilinformationen kann beispielsweise dadurch erreicht werden, dass jeder der an dem Erfassen von Profilinformationen beteiligten Server diese Profilinformation an den Profilserver 8 übermittelt und dieser das in der Datenbank 9 abgespeicherte Benutzerprofil des Benutzers 6 aktualisiert. Es ist ferner möglich, dass ein derartiges Erfassen von Profilinformationen dadurch automatisiert wird, dass der Profilserver 8 das Setzen eines Cookies bei dem Client 5 stets dann veranlasst, wenn der Benutzer 6 mittels des Clients 5 eine Netzwerkseite von einem der an dem Erfassen von Profilinformationen beteiligten Servern anfordert. Dies kann beispielsweise dadurch geschehen, dass auf einer Netzwerkseite, die der Benutzer 6 mittels des Clients 5 von einem derartigen Server anfordert, ein Link dargestellt ist, der beispielsweise zu einem anderen Server führt. Aktiviert der Benutzer 6 diesen Link, so wird automatisch bei dem Profilserver 8 ein sogenanntes Skript, also ein kleines Computerprogramm, gestartet, das den Client zum Setzen eines Cookies veranlasst. Ein erneutes Aktivieren eines derartigen Links, möglicherweise auf einer Netzwerkseite die von einem anderen Server an den Client 5 übermittelt wird, kann das Senden dieses Cookies an den Profilserver 8 veranlassen. Spätestens dann kann der Profilserver 8 Informationen erhalten, die als Profilinformation möglicherweise verwendbar sind.

Mittels der Auswertung des Benutzerprofils wird ebenfalls in dem Schritt 103 eine Produktklasse ermittelt. Hierbei kann beispielsweise vorgesehen sein, dass dynamisch eine Einteilung von Produkten in Klassen erfolgt. Beispielsweise können Produkte in lediglich zwei Klassen, wie eine hochpreisige und eine niedrigpreisige Klasse, eingeteilt werden. Zweckmäßigerweise ist eine derartige Klassifizierung jedoch deutlich differenzierter. Beispielsweise können unterschiedliche Produktarten (Lebensmittel, Kosmetik, Fahrzeuge, Baustoffe, ...), Branchen, Jahreszeiten, Tageszeiten und ähnliches zur Bildung von Produktklassen herangezogen werden. Die von dem zweiten Online-Shop 3 zum Verkauf angebotenen Produkten sind oder werden diesen Produktklassen zugeordnet.

In einem Schritt 104 wird mindestens ein Produkt aus der in dem Schritt 103 ermittelten Produktklasse ausgewählt. Selbstverständlich können sämtliche Produkte innerhalb der ermittelten Produktklasse ausgewählt werden. Insbesondere dann, wenn sich in der ermittelnden Produktklasse lediglich ein Produkt befindet. Zur Auswahl des oder der Produkte, die sich innerhalb der ermittelnden Produktklasse befinden und dem Benutzer zum Kauf angeboten werden sollen, können weitere Kriterien herangezogen werden. Diese können beispielsweise den Preis umfassen. Insbesondere können weitere Profilinformationen des dem Benutzer 6 zugeordneten Benutzerprofils hierzu herangezogen werden. Insgesamt ist die Auswahl des mindestens einen weiteren Produkts, für das automatisch die Bestellung vorbereitet werden soll, ein mehrstufiger Prozess. Diese gesamte Auswahl des Produkts kann deshalb besonderes gut mit Methoden der künstlichen Intelligenz, beispielsweise mittels eines regelbasierten Expertensystems, durchgeführt werden.

Selbstverständlich kann das weitere Produkt, für das die Bestellung gemäß des erfindungsgemäßen Verfahrens automatisch vorbereitet werden soll, auch ein Produkt sein, das von dem ersten Online-Shop 2 angeboten wird.

In einem Schritt 105 wird die Bestellung des ausgewählten weiteren Produkts automatisch vorbereitet. Hierzu wird das Produkt bzw. eine das Produkt repräsentierende und/oder beschreibende Information in ein Online-Bestellformular automatisch aufgenommen. Besonders vorteilhaft ist hier, wenn dies ein Online-Bestellformular ist, das der Benutzer dadurch anfordert, dass er das erste Produkt bei dem ersten Online-Shop 2 bestellt bzw. kauft. Ist hierbei vorgesehen, dem Benutzer 6 ein Online-Bestellformular, beispielsweise mittels einer Netzwerkseite, von dem ersten Online-Shop 2 mittels des Clients 5 zu übermitteln, so kann diesem Online-Bestellformular bereits das automatisch ausgewählte weitere Produkt hinzugefügt werden. Dies bewirkt eine sehr geringe Übertragung von weiteren Daten über das Kommunikationsnetzwerk 4. Insbesondere dann, wenn der Benutzer 6 dieses weitere Produkt tatsächlich kauft, ist eine deutliche Reduzierung der über das Kommunikationsnetzwerk 4 zu übermittelnden Daten erreichbar, verglichen mit einem Szenario, in dem der Benutzer 6 das weitere Produkt zu einem späteren Zeitpunkt in einem gesonderten Einkaufsprozess von dem ersten Online-Shop 2 oder dem zweiten Online-Shop 3 kauft.

Die automatische Vorbereitung der Bestellung des ausgewählten Produkts kann jedoch auch mittels einer E-Mail oder einer SMS an den Client 5 übermittelt werden. Insbesondere ist es vorstellbar, dass dem Benutzer 6 weitere Clients zugeordnet sind. Hier kann vorgesehen sein, dass die Information bezüglich der Bestellung des ausgewählten weiteren Produkts an eines der anderen, dem Benutzer 6 zugeordneten Clients übermittelt wird.

In einem Schritt 106 wird geprüft, ob der Benutzer 6 die automatisch eingeleitete Bestellung bestätigt hat. Eine derartige Bestätigung kann beispielsweise durch Aktivieren einer auf der an den Benutzer 6 übermittelten Netzwerkseite dargestellten Schaltfläche erfolgen. Eine Bestellbestätigung kann insbesondere implizit dadurch erfolgen, dass ein Bestellformular, mit dem die Bestellung des ersten Produkts durchführbar ist, auch die Durchführung der Bestellung des weiteren ausgewählten Produkts umfasst.

Bestätigt der Benutzer 6 die Bestellung des weiteren Produkts, so wird in einem Schritt 107 der Kauf sowohl des ersten Produkts als auch des weitern Produkts durchgeführt. Dies kann beispielsweise eine gemeinsame Bezahlung, eine gemeinsame Übersendung der Produkte, eine gemeinsame Beschaffung dieser Produkte bei einem Großhändler oder auch eine gemeinsame Rabattierung der gekauften Produkte umfassen. Insbesondere kann die Durchführung des Kaufs in dem Schritt 107 eine gemeinsame Bezahlung sowohl des ersten Produkts als auch des automatisch ausgewählten weiteren Produkts beinhalten. Durch derartige Maßnahmen ist eine deutliche Verringerung des Netzverkehrs dadurch möglich, dass weniger Daten bezüglich des Kaufs des weiteren Produkts über das Kommunikationsnetzwerk 4 von dem Client 5 ausgehend übertragen werden müssen, als wenn das weitere Produkt zu einem späteren Zeitpunkt separat von dem Benutzer 6 gekauft werden würde.

In einem Schritt 108 erfolgt eine Aktualisierung des Benutzerprofils. Eine Aktualisierung des Benutzerprofils umfasst beispielsweise Informationen bezüglich der in dem Schritt 107 gekauften Produkte. Eine Aktualisierung des Benutzerprofils kann hierbei insbesondere erreichen, dass dem Benutzer 6 die bereits gekauften Produkte nicht erneut zum Kauf angeboten werden. Ferner kann aus den gekauften Produkten ein Interesse des Benutzers 6 abgeleitet werden.

Hat der Benutzer 6 in dem Schritt 106 die automatisch vorbereitete Bestellung des ausgewählten weiteren Produkts nicht bestätigt, so wird in einem Schritt 109 lediglich der Kauf des ersten manuell von dem Benutzer 6 ausgewählten Produkts durchgeführt.

In dem Schritt 108 wird daraufhin ebenfalls das Benutzerprofil aktualisiert. Eine derartige Aktualisierung kann zum Ziel haben, dass das automatisch ausgewählte Produkt, das von dem Benutzer 6 jedoch nicht bestellt wurde, nicht erneut zum Kauf angeboten wird. Insbesondere können durch Auswertung einzelner, dem nicht gekauften Produkt zugeordneter Merkmale Rückschlüsse darauf gezogen werden, welche Produkte von dem Benutzer 6 auch in Zukunft nicht gekauft werden.

Ziel des erfindungsgemäßen Verfahrens ist es folglich, automatisch Produkte auszuwählen, die der Benutzer 6 mit hoher Wahrscheinlichkeit kaufen möchte und dem Benutzer 6 derartige Produkte beim Kauf eines anderen Produkts gleich mit anzubieten. Durch die gemeinsame Durchführung des Kaufs kann eine deutliche Reduzierung des über das Kommunikationsnetzwerks zur übertragenden Datenvolumens erreicht werden.

In Figur 3 ist eine weitere Ausführungsform des erfindungsgemäßen Client-Server Systems dargestellt. Das Client-Server Systems 1b umfasst ebenfalls, wie das in Figur 1 dargestellte Client-Server System 1a, einen Profilserver 8, der an ein Kommunikationsnetzwerk 4 angeschlossen ist und dem eine Datenbank 9 zugeordnet ist.

Das Client-Server System 1b umfasst ferner einen Online-Shop 10 und ein Tracking-System 11, die ebenfalls mit dem Kommunikationsnetzwerk 4 verbunden sind.

Ein Tracking-System 11 ermöglicht es beispielsweise, dass mehrere Online-Shops 10 Produkte, die sie zum Kauf anbieten, bei dem Tracking-System 11 registrieren. Diese oder andere Online-Shops können dann die bei dem Tracking-System 11 verwalteten und registrierten Produkte selbst zum Kauf anbieten. Hierbei wird jedoch der tatsächliche Verkauf über denjenigen Online-Shop durchgeführt, der das Produkt tatsächlich zur Verfügung stellt und der die Registrierung bei dem Tracking-System 11 veranlasst hat.

Ein derartiges Tracking-System 11 kann selbstverständlich zusammen mit dem Profilserver 8 lediglich als Softwareelement ausgebildet sein und auf einem in Figur 3 nicht dargestellten physikalischen Server ablaufen. Insbesondere können der Profilserver 8 und/oder das Tracking-System 11 zusammen mit dem Online-Shop 10 auf einem Server ablaufen.

Das Client-Server System umfasst ferner einen Client 12 der mit dem Kommunikationsnetzwerk 4 verbunden ist. Der Client 12 ist in einem Ladengeschäft 13 aufgestellt, das in Figur 3 als gestrichelte Linie dargestellt ist. Der Client 12 ist einem Kassensystem 14 zugeordnet, das ebenfalls in dem Ladengeschäft 13 aufgestellt ist. Das Kassensystem 14 umfasst ein Kartenlesegerät 15 mittels dessen beispielsweise EC-Karten zur Bezahlung eines gekauften Produkts eingelesen werden können.

Eine mögliche Ausführungsform des erfindungsgemäßen Verfahrens auf dem in Figur 3 dargestellten Client-Server System 1b ist in Figur 4 dargestellt.

In einem Schritt 200 leitet der Benutzer 6 den Kauf eines ersten Produkts in dem Ladengeschäft 13 ein. Dies kann beispielsweise dadurch erfolgen, dass der Benutzer 6 das ausgewählte erste Produkt in einen Warenkorb legt. Der Kauf des ersten Produkts kann ferner dadurch eingeleitet werden, dass der Benutzer 6 das Produkt auf ein Förderband legt, das zu dem Kassensystem 14 führt.

In einem Schritt 201 wird eine dem Benutzer 6 zugeordnete Kennung erfasst. Dies kann beispielsweise dadurch geschehen, dass der Benutzer 6 das erste Produkt bezahlen möchte und zur Bezahlung eine dem Benutzer 6 zugeordnete EC-Karte in das Kartenlesegerät 15 einführt. Eine derartige EC-Karte umfasst Informationen, die den Benutzer 6 eindeutig identifizieren können. Es ist ferner möglich, dass der Benutzer 6 eine von dem Ladengeschäft 13 ausgestellte Einkaufskarte besitzt, die mittels des Kartenlesegeräts 15 eingelesen wird.

Es ist ebenso möglich, dass der Benutzer 6 eine diesem zugeordnete persönliche Identifizierungsnummer (PIN) in ein dafür vorgesehenes Eingabegerät, beispielsweise einen Nummernblock einer Tastatur, eingibt.

In einem Schritt 202 veranlasst das Kassensystem 14 die Übermittlung der dem Benutzer 6 zugeordneten Kennung mittels des Clients 12 beispielsweise an den Online-Shop 10 oder an den Profilserver 8. Ferner kann vorgesehen sein, dass in dem Schritt 202 auch ein Merkmal des Ladengeschäfts 13 automatisch an den Online-Shop 10 oder den Profilserver 8 mit übermittelt wird. Insbesondere ist es möglich, dass eine Information bezüglich des von dem Benutzer 6 ausgewählten ersten Produkts automatisch an den Online-Shop 10 bzw. den Profilserver 8 übermittelt wird. Eine derartige, dem ersten Produkt zugeordnete Information, kann beispielsweise eine Identifizierung des Produkts selbst sein, die von dem Kassensystem 14 automatisch eingelesen wird.

In dem Schritt 203 wird analog zu dem in Figur 2 dargestellten Schritt 103 die Produktklasse ermittelt. In einem Schritt 204 wird automatisch das mindestens eine weitere Produkt ausgewählt. Auch dieser Schritt kann analog zu dem in Figur 2 beschriebenen Schritt 104 durchgeführt werden. Insbesondere kann hierbei das auszuwählende Produkt von dem Online-Shop 10 zum Verkauf angeboten werden. Es ist aber auch möglich, dass das auszuwählende weitere Produkt von dem Ladengeschäft 13 selbst zum Verkauf angeboten wird. Die Durchführung der Auswahl in dem Schritt 204 kann von dem Profilserver 8, dem Trackings-System 11, dem Online-Shop 10 oder dem Ladengeschäft 13 durchgeführt werden.

In einem Schritt 205 wird dem Benutzer 6 das mindestens eine weitere Produkt, das in dem Schritt 204 ausgewählt wurde, dargestellt. Dies kann beispielsweise mittels eines Displays 16 sein, das in dem Ladengeschäft 13 aufgestellt ist, beispielsweise in der Nähe des Kassensystems 14. Das Display 16 kann hierbei berührungsempfindlich ausgebildet sein, so dass durch Antippen einer bestimmten Schaltfläche die Bestätigung der Bestellung des ausgewählten weiteren Produkts veranlasst wird.

In einem Schritt 206 aktiviert der Benutzer 6 die auf dem Display 16 dargestellte Schaltfläche und bestätigt somit die automatisch vorbereitete Bestellung des ausgewählten weiteren Produkts. Wird das weitere Produkt von dem Ladengeschäft 13 zum Kauf angeboten, so kann vorgesehen sein, dass der Benutzer 6 das weitere Produkt direkt mitnehmen kann. Andernfalls kann vorgesehen sein, dass das Ladengeschäft 13 den Versand des ausgewählten Produkts an den Benutzer 6 in einem Schritt 208 veranlasst, nachdem in einem Schritt 207 beide Produkte in einem gemeinsamen Zahlvorgang bezahlt wurden.

Bei dieser Ausführungsform ist es folglich möglich, den Kauf eines von dem Online-Shop 10 zum Verkauf angebotenes Produkts in einem Ladengeschäft 13 durchzuführen. Hierbei wurde dieses Produkt insbesondere automatisch ausgewählt, sodass keine Belastung des Kommunikationsnetzwerks 4 dadurch entstand, dass der Benutzer 6 nach einem derartigen Produkt bzw. nach einem dieses Produkt anbietenden Online-Shop suchen musste. Da die Bezahlung ebenfalls sogleich in dem Ladengeschäft 13 durchgeführt wurde, fällt auch keine Datenübertragung bzgl. der Bezahlung zwischen dem Benutzer 6 und dem Online-Shop 10 an. Hierbei kann ferner vorgesehen sein, dass das Ladengeschäft 13 zu festgesetzten Terminen, beispielsweise einmal pro Monat, eine Bezahlung aller Produkte veranlasst, die auf diese Weise von dem Online-Shop gekauft werden.

Insbesondere ist es mit dem erfindungsgemäßen Verfahren auch möglich, dass der Benutzer 6 bei einem Kauf in dem Ladengeschäft 13 mehrere Produkte von einem Online-Shop 2, 3, 13 oder von mehreren unterschiedlichen Online-Shops angeboten bekommt und eine Bestellung veranlasst. Hierbei kann das erfindungsgemäße Verfahren besonders vorteilhaft sein, da sonst mehrere einzelne Bestellungen bei den unterschiedlichen Online-Shops durchgeführt werden müssten. Insbesondere, wenn eine oder mehrere der Aktionen ebenfalls zusammengefasst werden, kann eine weitere Verringerung des Netzverkehrs erreicht werden. Beispielsweise kann vorgesehen sein, dass die so ausgewählten Produkte alle zusammen von einem gemeinsamen Zentrallager aus an den Benutzer 6 übermittelt werden. Insbesondere kann auch die Bezahlung mittels einer einzigen Rechnung durchgeführt werden.

Besonders vorteilhaft ist jedoch das erfindungsgemäße Verfahren, wenn das weitere Produkt von dem Online-Shop 10 zum Verkauf angeboten wird. Dies reduziert die über das Kommunikationsnetzwerk 4 zu übertragenden Daten ganz besonders dadurch, dass der Benutzer 6 das von dem Online-Shop 10 angebotene Produkt nicht separat suchen, bestellen und kaufen muss.

In dem Schritt 206 kann automatisch die Zusendung des automatisch ausgewählten weiteren Produkts von dem Online-Shop 10 an den Benutzer 6 veranlasst werden. Es ist insbesondere vorstellbar, dass das ausgewählte weitere Produkt von dem Online-Shop 10 zu dem Ladengeschäft 13 gesendet wird, wo es der Benutzer 6 selbst abholen kann.

Selbstverständlich können einzelne Schritte des erfindungsgemäßen Verfahrens ergänzt, ausgetauscht oder hinzugefügt werden, solang die dem erfindungsgemäßen Verfahren zugrunde liegende Idee bewahrt bleibt. Insbesondere können eine Vielzahl von weiteren Servern und Clients an dem Verfahren beteiligt sein. Dies ist auch die Regel, da bei der Übertragung von Daten über das Kommunikationsnetzwerk 4 regelmäßig eine Vielzahl von unterschiedlichen Servern und Clients beteiligt sind. Insbesondere werden eine Vielzahl von Funktionalitäten eines einzelnen Computerprogramms bereits als Server bzw. als Client dargestellt und bezeichnet. Somit ist es beispielsweise möglich, dass der erste Online-Shop 2, der zweite Online-Shop 3 und der Online-Shop 10 sowie das Tracking-System 11 und der Profilserver 8 auf einem gemeinsamen Server ablaufen.

Insbesondere ist es vorstellbar, dass eine oder mehrere dieser Komponenten in weitere Unterkomponenten zergliedert sind.

## Patentansprüche

1. Verfahren zur Auswahl mindestens eines von einem Online-Shop (2; 3; 10) zum Kauf angebotenen weiteren Produkts **dadurch gekennzeichnet, dass**
- ein Benutzer (6) den Kauf eines ersten Produkts einleitet,
- eine dem Benutzer (6) zugeordnete Kennung erfasst wird,
- anhand der Kennung ein dem Benutzer (6) zugeordnetes Benutzerprofil automatisch ermittelt wird, wobei das Benutzerprofil mindestens eine von einem Server erfasste Profilinformation enthält,
- das Benutzerprofil automatisch ausgewertet wird,
- in Abhängigkeit von der Auswertung des Benutzerprofils und von mindestens einer Information bezüglich des ersten Produkts mindestens eine Produktklasse automatisch ermittelt wird,
- automatisch mindestens ein von dem Online-Shop (2; 3; 10) angebotenes weiteres Produkt ausgewählt wird, wobei das weitere Produkt der mindestens einen Produktklasse zugeordnet ist und
- eine Bestellung des ausgewählten weiteren Produkts automatisch vorbereitet wird.

2. Verfahren nach Anspruch 1, **dadurch gekennzeichnet, dass** der Kauf des ersten Produkts in einem Ladengeschäft (13) eingeleitet wird.

3. Verfahren nach Anspruch 2, **dadurch gekennzeichnet, dass** zur Ermittlung der Information bezüglich des ersten Produkts mittels eines RFID-readers eine dem Produkt zugeordnete, in einem RFID abgespeicherte Kennung erfasst wird.

4. Verfahren nach einem der Ansprüche 2 oder 3, **dadurch gekennzeichnet, dass** der RFID-reader einem Einkaufswagen oder einem Einkaufskorb zugeordnet ist.

5. Verfahren nach einem der Ansprüche 2 bis 4, **dadurch gekennzeichnet, dass** das ausgewählte Produkt dem Benutzer (6) auf einem einem Einkaufswagen oder einem Einkaufskorb zugeordneten Bildschirm angezeigt wird.

6. Verfahren nach Anspruch 5, **dadurch gekennzeichnet, dass** dem Einkaufswagen oder dem Einkaufskorb mindestens ein Auswahlmittel zugeordnet ist mittels dessen eine Bestellung des angezeigten, ausgewählten Produkts durchführbar ist.

7. Verfahren nach Anspruch 1, **dadurch gekennzeichnet, dass** der Kauf des ersten Produkts bei einem ersten Online-Shop (2) eingeleitet wird.

8. Verfahren nach einem der vorangehenden Ansprüche, **dadurch gekennzeichnet, dass** der Kauf des ersten Produkts mehrere Aktionen umfasst und bei dem Kauf des weiteren Produkts mindestens eine Aktion zusammen mit der entsprechenden, für den Kauf des ersten Produkts durchzuführenden Aktion, durchgeführt wird.

9. Verfahren nach Anspruch 8, **dadurch gekennzeichnet, dass** die Aktion eine Bestellung, eine Bestellbestätigung, eine Bezahlung oder eine Versendung der Ware umfasst.

10. Verfahren nach einem der vorangehenden Ansprüche, **dadurch gekennzeichnet, dass** das Verhalten des Benutzers (6) bezüglich des ausgewählten weiteren Produkts erfasst und ausgewertet wird und in Abhängigkeit von einem Ergebnis dieser Auswertung automatisch das Benutzerprofil aktualisiert wird.

11. Verfahren nach einem der vorangehenden Ansprüche, **dadurch gekennzeichnet, dass** eine Information des Benutzers (6) bezüglich der Einleitung des Bestellvorgangs zum Kauf des mindestens einen automatisch ausgewählten weiteren Produkts per email, SMS oder MMS und eine Bestätigung der Bestellung per email, SMS oder MMS erfolgt.

12. Verfahren nach einem der vorangehenden Ansprüche, **dadurch gekennzeichnet, dass** eine Information des Benutzers (6) bezüglich der Einleitung des Bestellvorgangs mittels einer Netzwerkseite erfolgt, die dem Benutzer (6) mittels eines dem Benutzer (6) zugeordneten Clients übermittelt wird und eine Bestätigung der Bestellung durch Aktivieren einer auf der Netzwerkseite dargestellten Schaltfläche ermöglicht wird.

13. Verfahren nach einem der vorangehenden Ansprüche, **dadurch gekennzeichnet, dass** das Benutzerprofil mindestens eine Profilinformation enthält bezüglich
- eines bestellten oder gekauften Produkts,
- eines nicht gekauften Produkts,
- des Kaufverhaltens des Benutzers bei diesem oder einem anderen Online-Shop (2; 3; 10),
- mindestens eines dem Benutzer (6) zugeordneten personenbezogenen Datums,
- mindestens eines Suchbegriffs, der von dem Benutzer (6) an eine Suchmaschine oder eine Produktsuchmaschine übermittelt wurde,
- des Verhalten des Benutzers (6) bezüglich mindestens einer diesem dargestellten Werbeanzeige.

14. Verfahren nach einem der Ansprüche 2 bis 13, **dadurch gekennzeichnet, dass** das weitere Produkt in Abhängigkeit von einem dem ersten Online-Shop (2) oder dem Ladengeschäft(13) zugeordneten charakteristischen Merkmal ausgewählt wird.

15. Verfahren nach einem der vorangehenden Ansprüche, **dadurch gekennzeichnet, dass** die dem Benutzer (6) zugeordnete Kennung eine Einkaufkartennummer, eine Kreditkartennummer, eine EC-Kartennummer, eine in einem Cookie abgespeicherte Zeichengfolge, eine Einwahl-ID, eine Gerätenummer oder eine Browser-ID ist.

16. Verfahren nach einem der vorangehenden Ansprüche, **dadurch gekennzeichnet, dass** das Verhalten des Benutzers (6) bezüglich des ausgewählten weiteren Produkts erfasst und ausgewertet wird und in Abhängigkeit von einem Ergebnis dieser Auswertung die Klassifizierung aktualisiert wird.

17. Verfahren nach einem der vorangehenden Ansprüche, **dadurch gekennzeichnet, dass** das Benutzerprofil mittels eines Profilservers (8) verwaltet wird, wobei der Profilserver (8) mit einem Kommunikationsnetzwerk verbunden ist.

18. Verfahren nach einem der vorangehenden Ansprüche, **dadurch gekennzeichnet, dass** der Kauf des ersten Produkts in einem Online-Shop (2; 3; 10) erfolgt und die Auswahl des weiteren Produkts in Abhängigkeit von der Auswertung eines referers erfolgt.

19. Client-Server System (1a; 1b), das einen mit einem Kommunikationsnetzwerk verbundenen Client und einen mit dem Kommunikationsnetzwerk verbundenen Server umfasst, wobei der Server als ein Online-Shop (2; 3; 10) ausgebildet ist, **dadurch gekennzeichnet, dass** das Client-Server System (1a; 1b) Mittel zur Durchführung eines Verfahrens nach einem der Ansprüche 1 bis 19 aufweist.

20. Computerprogramm, das auf einem Client-Server System (1a; 1b) auflauffähig ist, **dadurch gekennzeichnet, dass** ein Verfahren nach einem der Ansprüche 1 bis 19 ausgeführt wird, wenn es auf dem Client-Server System (1a; 1b) abläuft.

21. Computerprogramm nach Anspruch 20, **dadurch gekennzeichnet, dass** das Computerprogramm auf einem Speicherelement abgespeichert ist, wobei das Speicherelement als ein Read-Only-Memory (ROM), ein Random-Access-Memory (RAM), eine Festplatte (hard disc), eine Compact Disc (CD), eine Digital Versatile Disc (DVD) oder mindestens ein mindestens einer Komponente des Client-Server Systems (1a; 1b) zugeordneter Speicherbereich ausgebildet ist.
